# EUROPEAN PATENT APPLICATION

(11) **EP 2 903 254 A1**
(43) Date of publication of application: **05.08.2015**
(21) Application number: 14183533.0
(22) Date of filing: 04.09.2014
(51) Int. Cl.: H04N 5/217, H04N 5/232, G03B 7/08

(54) **Photographing apparatus**

(30) Priority: 30.01.2014 US 201461933468 P
(71) Applicant: Kabushiki Kaisha Toshiba, Tokyo 105-8001 (JP)
(72) Inventor: Seta, Shoji, Tokyo, 105-8001 (JP); Tokito, Yoshihiko, Tokyo, 105-8001 (JP)
(74) Representative: Hoffmann Eitle

(57) **Abstract**

According to an embodiment, a CPU of a smartphone executes: a first process for judging whether or not there is a first input corresponding to first registered information in a short-distance photographing mode; a second process for, when it is judged in the first process that the first input corresponding to the first registered information exists, performing image pickup by an image sensor after elapse of a first time period and displaying a still image picked up and obtained on the display device; a third process for judging whether or not there is a second input corresponding to second registered information after displaying the still image picked up and obtained by the second process on the display device; and a fourth process for recording the still image to a memory when it is judged in the third process that the second input corresponding to the second registered information exists.

## Description

### FIELD

An embodiment described herein relates generally to a photographing apparatus.

### BACKGROUND

Photographing apparatuses, such as a camera, have become widespread. Recently, an apparatus such as a smartphone and a mobile phone is equipped with a camera function, and users of smartphones and the like can easily perform photographing.

A camera is provided with a self-timer function, and a user can photograph himself or a group picture including himself, using the self-timer function.

When the user performs photographing on himself as an object or takes a group picture using the self-timer function, he performs photographing again if a photographed image obtained after the photographing is not a good one. This happens because, in the case of photographing himself or performing self-timer photographing, the user cannot press a shutter button while looking at a state of an object in a finder of the camera.

Such a digital camera that causes a predetermined pose to be recognized to control shutter timing, at the time of self-timer photographing, and such a digital camera that, when detecting a pre-registered face image, starts count-down and then performs automatic photographing are proposed.

As described above, it is possible recently to mount a camera on a smartphone or the like and photograph oneself as an object, with the smartphone or the like. In the case of the smartphone or the like, an image picked up by the mounted camera is displayed on a screen of a display. A user can photograph himself, looking at the displayed image.

However, even if the user can photograph himself looking at the image displayed on the display, there may be a case where he cannot photograph himself as he expects. In this case, the user has to perform a deletion operation for deleting image data of the unexpected image from a memory after photographing, on a photographing apparatus such as the smartphone and the like. The deletion operation has to be done after reading out photographed images from the memory, displaying the images on the display and confirming an image to be deleted, which is a troublesome work for the user.

### BRIEF DESCRIPTION OF THE DRAWINGS

Fig. 1 is a block diagram showing a configuration of a smartphone 1 of the present embodiment;
Fig. 2 is a front view of the smartphone 1 of the present embodiment;
Fig. 3 is a flowchart showing an example of a process flow of a self-photographing mode according to the present embodiment;
Fig. 4 is a diagram for illustrating an example of a live image displayed on a display screen 9a of a display device 9 according to the present embodiment;
Fig. 5 is a diagram showing an example of a still image SI displayed on the display screen 9a of the display device 9 according to the present embodiment; and
Fig. 6 is a diagram for illustrating an example of a sub-screen display displayed on the display screen 9a of the display device 9 according to the present embodiment.

### DETAILED DESCRIPTION

A photographing apparatus of an embodiment includes an image sensor, a display device and an arithmetic processing section. When a photographing mode is set to a short-distance photographing mode, the arithmetic processing section executes a first process for judging whether or not there is a first input corresponding to first registered information. When it is judged in the first process that the first input corresponding to the first registered information exists, the arithmetic processing section performs image pickup by the image sensor after elapse of a first time period, and executes a second process for displaying a still image picked up and obtained on the display device. After displaying the still image picked up and obtained by the second process on the display device, the arithmetic processing section executes a third process for judging whether or not there is a second input corresponding to second registered information. When it is judged in the third process that the second input corresponding to the second registered information exists, the arithmetic processing section executes a fourth process for recording the still image to a memory.

### (Configuration)

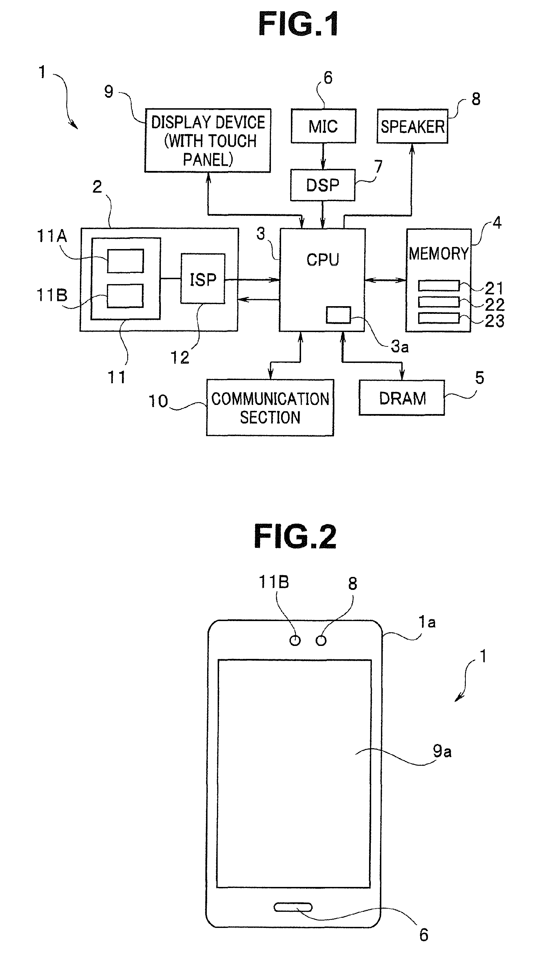

Fig. 1 is a block diagram showing a configuration of a smartphone 1 of the present embodiment. Fig. 2 is a front view of the smartphone 1 of the present embodiment.

The smartphone 1 as a photographing apparatus is configured being provided with an image sensor 2, a central processing unit (hereinafter abbreviated as a CPU) 3, a nonvolatile memory 4, a DRAM 5, a microphone 6, a digital signal processor (hereinafter abbreviated as a DSP) 7, a speaker 8, a display device 9, and a communication section 10 including a circuit which performs a wireless communication process for telephone communication and data communication.

The image sensor 2 includes an image sensor section 11 and an image signal processor (hereinafter abbreviated as an ISP) 12. The image sensor section 11 includes two image sensor devices 11A and 11B. The image sensor device 11A is arranged on a back side of a case 1a of the smartphone 1. The image sensor device 11B is arranged on a front side of the case 1a, that is, on a surface side where a display screen 9a of the display device 9 exists.

In the case of performing normal photographing, a user photographs an object using the image sensor device 11A, looking at an object image displayed on the display screen 9a of the display device 9. On the other hand, in the case of the short-distance photographing mode (a self-photographing mode to be described later) for photographing himself as an object, the user can perform photographing by the image sensor device 11B, looking at an image of himself displayed on the display screen 9a of the display device 9. That is, the image sensor 2 includes at least the image sensor device 11B arranged on a same surface as the display screen 9a of the display device 9.

The ISP 12 is an image processing circuit which performs predetermined image processing for an image sensor signal from the image sensor section 11, that is, the image sensor device 11A or the image sensor device 11B to generate an image signal which can be processed by the CPU 3, and transmits the image signal to the CPU 3.

The CPU 3 includes a ROM, a RAM and the like, and the CPU 3 is a control section which controls each section of the image sensor 2, the display device 9 and the like according to each function of the smartphone 1. The CPU 3 controls the communication section 10 for a communication function and a data communication processing function though it is not described here. The CPU 3 controls the image sensor 2 to drive any one of the image sensor devices 11A and 11B of the image sensor 2 according to a photographing mode.

Furthermore, the CPU 3 includes a timer 3a inside. A time period can be set for the timer 3a. When being turned on, the timer 3a starts timing. When a set time period elapses, the timer 3a outputs a time-out signal.

The memory 4 is a nonvolatile rewritable storage device such as a flash memory. Image data of a still image and a moving image picked up and obtained by the image sensor 2 and various pieces of data required for various processes are recorded. The various pieces of data recorded in the memory 4 includes multiple pieces of registered information to be described later.

The DRAM 5 is a storage device as a working area used by the CPU 3 when the CPU 3 performs the various processes.

The microphone 6 is a device to which a sound such as the user's voice is inputted. The DSP 7 is a voice processing circuit for converting a sound signal outputted by the microphone 6 to a digital signal and providing the sound signal for the CPU 3.

The speaker 8 is a device for outputting a sound. At the time of telephone communication, the user can perform the telephone communication using the microphone 6 and the speaker 8.

The display device 9 is a device capable of displaying an image like a liquid crystal display. A touch panel is provided on the display screen 9a. A menu screen for various functions and various buttons are displayed on the display screen 9a of the display device 9. Therefore, the user can select the various commands to give an execution instruction by touching the menu screen or the various buttons displayed on the display screen 9a.

The communication section 10 includes an antenna, and the communication section 10 is a circuit for performing wireless communication with a communication apparatus like a wireless base station.

Therefore, the user can select a desired function to perform telephone communication or the like and perform photographing using the image sensor 2 by operating the menu screen and the buttons displayed on the display screen 9a,

### (Registered information)

A lot of pieces of registered information for various functions are registered in advance with the smartphone 1. Here, registered information used in the case of photographing oneself as an object (during the self-photographing mode) will be described.

Multiple pieces of registered information for the self-photographing mode are stored in the memory 4. Here, first registered information 21, second registered information 22 and third registered information 23 are stored in the memory 4 in advance. The first to third pieces of registered information 21 to 23 are image information.

The first registered information 21 is image information of a pose of a hand showing a V sign (hereinafter also referred to as a first pose). The first pose is a pose for giving an instruction to perform photographing as described later.

The second registered information 22 is image information about a pose of a closed hand showing so-called "rock" (hereinafter also referred to as a second pose). The second pose is a pose for giving an instruction to record, that is, store a photographed image into the memory 4 as described later.

The third registered information 23 is image information about a pose of a hand opened wide showing a so-called "paper" (hereinafter also referred to as a third pose). The third pose is a pose for giving an instruction to perform photographing again as described later.

All of the first to third pose images are images obtained by actually photographing the respective hand poses made by an ordinary person.

Note that, though image data of the hand showing a V sign, the hand showing "rock" and the hand showing "paper" is used as the registered information here as an example, the registered information may be information of a part of a face of an object, such as image data of lips in different forms, image data of a face with a winked eye and image data of a face with a put out tongue. This is because, since photographing in the self-photographing mode is performed from a short distance, the user's lips and eyes can be extracted relatively accurately.

The first registered information 21, the second registered information 22 and the third registered information 23 are used during the self-photographing mode which is for photographing oneself as an object.

Note that the pieces of registered information 21 to 23 may be stored in the ROM in the CPU 3.

Furthermore, the pieces of registered information 21 to 23 may be such that are obtained by the user photographing the hand in each of the poses described above himself and registering obtained images with the memory 4.

Furthermore, note that it is also possible to enable the user to arbitrarily change which registered information is to be used for which function (any of the photographing instruction, the recording instruction and the re-photographing instruction). For example, it is possible to display pieces of registered information set for the smartphone 1 in advance (or photographed and registered by the user) on the display screen 9a so that the user can assign or change a function (any of the photographing instruction, the recording instruction and the re-photographing instruction) for each of the displayed pieces of information.

### (Operation)

Next, an operation of the short-distance photographing mode for photographing oneself as an object with the smartphone 1 will be described.

When the user gives a predetermined instruction to the smartphone 1, an operation mode of the smartphone 1 becomes the self-photographing mode for photographing the user himself as an object from a short distance. The self-photographing mode is the short-distance photographing mode and is a mode for the user to photograph himself, holding the smartphone 1 with his hand. Therefore, the short-distance photographing mode is a photographing mode used when distance between the smartphone 1 and the user, who is an object, is within a range from about 50 cm to 1 m.

When the smartphone 1 is in the self-photographing mode, the image sensor device 11B of the image sensor 2 is driven, and an image signal from the image sensor device 11B is outputted to the CPU 3. During the self-photographing mode, the user performs photographing with himself as an object, holding the smartphone 1, for example, with his left hand and looking at the display screen 9a.

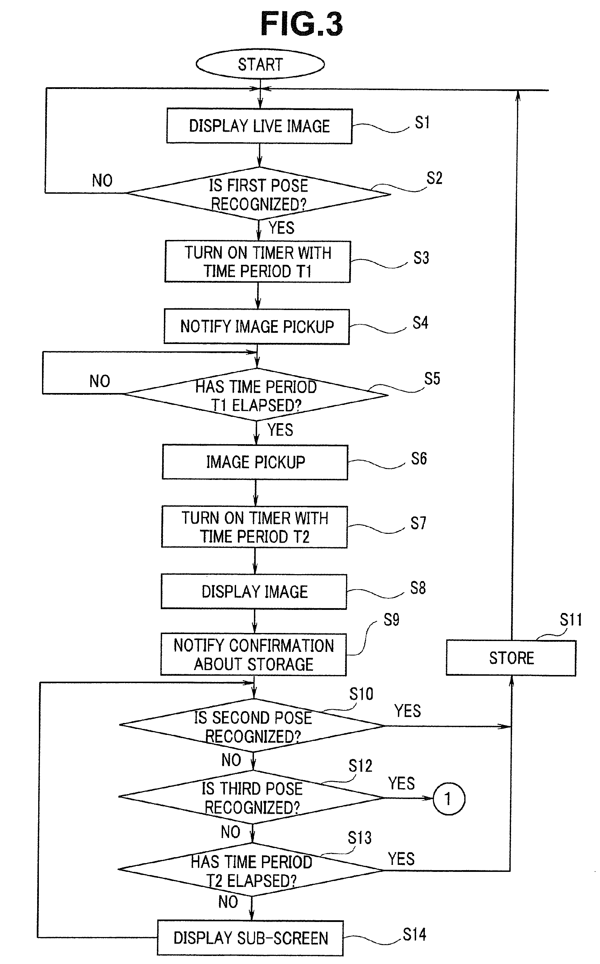

Fig. 3 is a flowchart showing an example of a process flow of the self-photographing mode.

When the smartphone 1 is set to the self-photographing mode, the CPU 3, which is the arithmetic processing section, generates a live image based on an image signal from the ISP 12 and displays the live image on the display device 9 (step S1). For example, the live image displayed on the display device 9 is an image generated by thinning out frames and pixels from the image signal from the image sensor 2.

Then, the CPU 3 judges whether the first pose is recognized or not (step S2). At step S2, the CPU 3 judges whether or not an image corresponding to an image of the first registered information 21 exists in the image from the ISP 12. That is, the process of step S2 is a process for judging whether or not the input corresponding to the first registered information 21 exists. More specifically, since the first registered information 21 is image information about the pose of a hand showing a V mark, it is judged whether or not the hand showing a V mark exists in the image from the image sensor 2.

At step S2, for example, by performing pattern matching processing, it is judged whether or not an image corresponding to an image having a contour shape which is the same as or similar to a contour shape extracted from the image of the first registered information 21 exists in the image outputted from the image sensor 2. If the first pose is not recognized (S2: NO), the process returns to step S1.

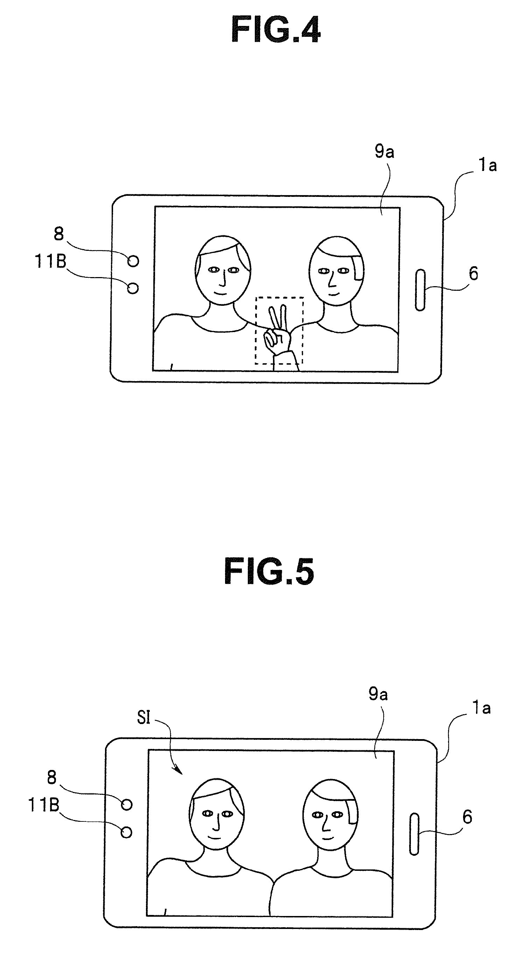

Fig. 4 is a diagram for illustrating an example of the live image displayed on the display screen 9a of the display device 9. Two persons, the user himself and another person, are displayed on the display screen 9a. When one of the two takes the first pose, which is the pose of a hand showing a V mark so that the V mark hand is displayed on the display screen 9a, the first pose is recognized at step S2. It is judged that the image of the first pose exists in an area indicated by a dotted line in Fig. 4.

If the first pose is recognized (S2: YES), the CPU 3 sets a time period T1 for the timer 3a and turns on the timer (step S3). Then, the CPU 3 performs a photographing notification process (step S4). In the photographing notification process, for example, a voice output, "Now, photographing starts" from the speaker 8, start of output of a countdown voice from the speaker 8, blinking display of a red circle mark on the display screen 9a of the display device 9 or the like is performed. Note that photographing can be performed without performing the notification process.

Thus, the first pose is a photographing command by the user to the smartphone 1. By this notification, the user can know that the first pose has been recognized, and photographing is about to start. The user may continue taking the first pose or may stop taking the first pose.

After the photographing notification process, the CPU 3 judges whether the time period T1 has elapsed or not (step S5). Until the time period T1, for example, three seconds, elapses, the process does not do anything. Thus, the photographing notification process continues until the time period T1 elapses. That is, the CPU 3, which is the arithmetic processing section, executes the process for notifying that photographing by the image sensor 2 is to be performed during a period after it is judged that the input corresponding to the first registered information 21 exists and before image pickup and display processes executed next are executed.

If the time period T1 elapses (S5: YES), the CPU 3 executes an image sensor process (step S6). A still image acquired by the image sensor process is an image generated from the image signal from the image sensor 2, and the still image is temporarily stored in the DRAM 5.

Then, the CPU 3 sets a time period T2 (for example, five seconds) for the timer 3a and turns on the timer 3a (step S7).

The CPU 3 reads the still image stored in the DRAM 5 and displays the still image on the display screen 9a of the display device 9 (step S8). Since the obtained still image SI is displayed on the display screen 9a by the process of step S8, the user can confirm the obtained still image SI. Fig. 5 is a diagram showing an example of the still image SI displayed on the display screen 9a of the display device 9.

As described above, the CPU 3 executes the process for, when it is judged that there is an input corresponding to the first registered information 21, performs image pickup by the image sensor 2 after elapse of the time period T1 and displays the picked up and obtained still image SI on the display device 9.

Next, the CPU 3 notifies confirmation about storage (step S9). The notification for confirmation about storage is performed, for example, by a voice output from the speaker 8 such as "To be stored?", a message display on the display screen 9a of the display device 9, such as "To be stored?", or the like.

Then, the CPU 3 judges whether the second pose is recognized or not (step S10). That is, the CPU 3 judges whether or not an image corresponding to an image of the second registered information 22 exists in the image from the image sensor 2. That is, the process of step S10 is a process for judging whether or not the input corresponding to the second registered information 22 exists after displaying the picked up and obtained still image SI on the display device 9.

More specifically, since the second registered information 22 is image information about the pose of a closed hand showing "rock", it is judged whether or not the hand showing "rock" exists in the image from the image sensor 2. At step S10 also, by performing pattern matching processing, it is judged whether or not an image corresponding to an image having a contour shape which is the same as or similar to a contour shape extracted from the image of the second registered information 22 exists in the image outputted from the image sensor 2.

If the second pose is recognized (S10: YES), the CPU 3 executes a storage process (step S11) by writing the image data of the still image SI temporarily stored in the DRAM 5 into the memory 4, and the process returns to step S1. That is, the process of step S10 is a process for, when the input corresponding to the second registered information 22 exists, recording the still image SI to the memory 4. Thus, the second pose is a storage command by the user to the smartphone 1.

If the second pose is not recognized (S10: NO), the CPU 3 judges whether the third pose is recognized or not (step S12). If the third pose is recognized (S12: YES), the process returns to step S1, and the photographing process is executed again. Thus, the third pose is a re-photographing command by the user to the smartphone 1.

Note that, though the third pose is used as the re-photographing command, the first pose may be used as the re-photographing command instead of the third pose. Using the first pose has a merit of reducing the registered information.

If the third pose is not recognized (S12: NO), the CPU 3 judges whether the time period T2 has elapsed or not (step S13). If the time period T2 has not elapsed, the CPU 3 executes a sub-screen display process (step S 14). That is, if the time period T2 has not elapsed, a sub-screen frame 9b appears on the display screen 9a, and a live image MV based on an image signal outputted from the image sensor 2 is displayed in the sub-screen frame 9b. The process of step S 14 is a process for displaying the still image SI picked up and obtained in the image sensor process (step S6) on the display device 9 as well as displaying the current live image obtained by the image sensor 2 on the display device 9.

Therefore, the user is given the time period T2 for selecting whether or not to perform re-photographing.

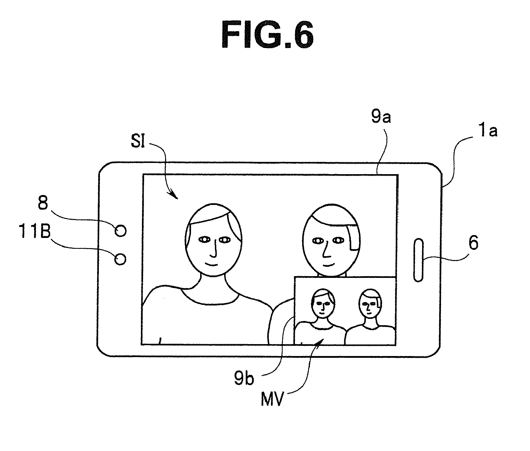

Fig. 6 is a diagram for illustrating an example of the sub-screen display displayed on the display screen 9a of the display device 9. As shown in Fig. 6, the live image MV is displayed in the sub-screen frame 9b, being overlapped on the still image SI.

After the process of step S14, the process returns to step S10, and the flow from step S10 is repeated until the time period T2 elapses.

Thus, the image photographed by step S8 is displayed on the display device 9, and image data thereof is recorded to a memory 33 if the user takes the second pose, which is the storage command.

However, if the user takes the third pose within the time period T2 after the image photographed by step S8 is displayed on the display device 9, the image data is not recorded to the memory 33. The process returns to step S1, and re-photographing becomes possible.

That is, the CPU 3, which is the arithmetic processing section, executes the process for judging whether or not an input corresponding to the third registered information 23 exists within the time period T2 after displaying the still image SI picked up and obtained in the image sensor process (step S6) and the display process (step S8), and executes the process for re-photographing if it is judged that the input corresponding to the third registered information 23 exists.

Furthermore, if the user takes neither the second pose nor the third pose within the time period T2 after the image photographed by step S8 is displayed on the display device 9 (S13: NO), the CPU 3 records the image data to the memory 33 (step S11). The process then returns to step S1, and the smartphone 1 is in a state that re-photographing is possible. That is, if it is not judged that the input corresponding to the second pose exists, the still image SI is automatically stored into the memory 33 after elapse of a predetermined time period after the still image SI is displayed on the display device 9.

Since the live image MV based on the image signal outputted from the image sensor 2 is displayed in the sub-screen frame 9b, the user can judge whether or not to perform re-photographing by comparing the photographed still image SI and the live image MV when the still image SI is displayed and change a direction, expression and the like of a face. Note that the sub-screen frame 9b is not indispensable, and it is possible for the user to determine whether or not to display the sub-screen frame 9b.

Note that, though the photographing apparatus described above is a smartphone, the photographing apparatus of the embodiment may be an apparatus such as a mobile phone and a tablet terminal provided with a camera function, or a digital camera.

As described above, according to the present embodiment, even if one may fail to photograph himself as he expects, at the time of photographing himself, he can record only images he wants to record, to a memory by an easy operation and easy instruction.

Especially, such conventional troublesome work becomes unnecessary that, in order to delete image data which is not an expected image after photographing from a memory, the user has to read photographed images from the memory, displays the photographed images on a display, confirms images to be deleted and then performs a deletion operation. That is, it is possible to easily store or delete an image-captured image without operating a touch panel and the like of a smartphone, while performing photographing.

Next, modifications of the above embodiment will be described.

In a modification 1, the registered information may be information other than image information.

Though the first to third pieces of registered information 21 to 23 described above are image information, they may be voice information. For example, the first registered information, the second registered information and the third registered information may be voice information about a "shutter" instead of the image information about the first pose, voice information about "storage" instead of the image information about the second pose and voice information about "re-photographing" instead of the image information about the third pose, respectively.

That is, the CPU 3 judges whether or not a sound acquired by the microphone 6 corresponds to sounds of the first to third pieces of registered information 21 to 23, which are sound information.

In a modification 2, the first registered information not only is information for judging the photographing command but also may include information about the number of photographs to be consecutively taken.

In the embodiment described above, the first registered information is an image of a hand showing a V mark, and the photographing process is performed once when the image of a hand showing a V mark is recognized. However, it is also possible to register multiple pieces of first registered information, each of which includes information indicating the number of times of performing image pickup so that the image pickup at step S6 is performed the indicated number of times. It is also possible to display multiple image-captured still images being arranged on the display screen 9a of the display device 9 at the same time.

The information about the number of photographs to be consecutively taken may be included in the first registered information, for example, such that, in the case where an image of a hand with one finger up is registered as one of the pieces of first registered information and an image of a hand with two fingers up (an image of a hand showing a V mark) is registered as another piece of first registered information, photographing is performed once when it is judged that the image of a hand with one finger up is included in an image outputted from the image sensor 2, and photographing is consecutively performed twice when the image of a hand with two fingers up is included in the image outputted from the image sensor 2.

While certain embodiments have been described, these embodiments have been presented by way of example only, and are not intended to limit the scope of the inventions. Indeed, the novel devices described herein may be embodied in a variety of other forms; furthermore, various omissions, substitutions and changes in the form of the devices described herein may be made without departing from the spirit of the inventions. The accompanying claims and their equivalents are intended to cover such forms or modifications as would fall within the scope and spirit of the inventions.

## Claims

1. A photographing apparatus comprising:
an image sensor;
a display device; and
an arithmetic processing section configured to execute:
a first process for judging whether or not there is a first input corresponding to first registered information when a photographing mode is set to a short-distance photographing mode;
a second process for, when it is judged in the first process that the first input corresponding to the first registered information exists, performing image pickup by the image sensor after elapse of a first time period and displaying a still image picked up and obtained on the display device;
a third process for judging whether or not there is a second input corresponding to second registered information after displaying the still image picked up and obtained by the second process on the display device; and
a fourth process for recording the still image to a memory when it is judged in the third process that the second input corresponding to the second registered information exists.

2. The photographing apparatus according to claim 1, wherein the image sensor comprises an image sensor device arranged at least on a same surface as the display device.

3. The photographing apparatus according to claim 1 or 2, wherein the short-distance photographing mode is a photographing mode for a distance from an object being within a range from 50 cm to 1 m.

4. The photographing apparatus according to claim 3, wherein the object is a photographer; and
the photographing apparatus is a smartphone, a tablet terminal, a mobile phone or a digital camera.

5. The photographing apparatus according to one of claims 1 to 4, wherein the arithmetic processing section executes a fifth process for judging whether a third input corresponding to third registered information exists or not within a second time period after displaying the still image picked up and obtained by the second process on the display device, and, if it is judged in the fifth process that the third input corresponding to the third registered information exists, executes the first process.

6. The photographing apparatus according to claim 5, wherein the still image is not recorded to the memory if it is judged in the fifth process that the third input corresponding to the third registered information exists.

7. The photographing apparatus according to claim 5 or 6, wherein the arithmetic processing section executes a sixth process for displaying the still image picked up and obtained by the second process on the display device and displaying a current live image obtained by the image sensor on the display device.

8. The photographing apparatus according to one of claims 1 to 7, wherein the arithmetic processing section performs a seventh process for notifying that image pickup by the image sensor is to be performed during a period after it is judged in the first process that the first input corresponding to the first registered information exists and before the second process is executed.

9. The photographing apparatus according to one of claims 1 to 8, wherein
the first registered information includes information about the number of times of performing image pickup; and
the arithmetic processing section performs the image pickup the number of times specified by the information about the number of times of performing image pickup and displays multiple image-captured still images at the same time on the display device.

10. The photographing apparatus according to one of claims 1 to 9, wherein
the first registered information is image information; and
the arithmetic processing section judges in the first process whether or not an image corresponding to the first registered information exists in an image outputted from the image sensor.

11. The photographing apparatus according to one of claims 1 to 10, wherein
the second registered information is image information; and
the arithmetic processing section judges in the third process whether or not an image corresponding to the second registered information exists in an image outputted from the image sensor.

12. The photographing apparatus according to claim 5 or a claim dependent on claim 5, wherein
the third registered information is image information; and
the arithmetic processing section judges in the fifth process whether or not an image corresponding to the third registered information exists in an image outputted from the image sensor.

13. The photographing apparatus according to one of claims 1 to 12, comprising a microphone, wherein
the first registered information is sound information; and
the arithmetic processing section judges in the first process whether or not a sound acquired by the microphone corresponds to a sound of the first registered information.

14. The photographing apparatus according to one of claims 1 to 13, comprising a microphone, wherein
the second registered information is sound information; and
the arithmetic processing section judges in the third process whether or not a sound acquired by the microphone corresponds to a sound of the second registered information.

15. The photographing apparatus according to claim 14, wherein
the third registered information is sound information; and
the arithmetic processing section judges in the fifth process whether or not the sound acquired by the microphone corresponds to a sound of the third registered information.
